# EUROPÄISCHE PATENTSCHRIFT

(11) **EP 3 066 363 B1**
(45) Veröffentlichungstag und Bekanntmachung des Hinweises auf die Patenterteilung: **11.12.2019**
(21) Anmeldenummer: 14789526.2
(22) Anmeldetag: 21.10.2014
(51) Int. Cl.: F16H 57/03, F16H 57/04

(54) **GETRIEBE MIT GEHÄUSE**
TRANSMISSION WITH HOUSING
MÉCANISME DE TRANSMISSION AVEC CARTER

(30) Priorität: 08.11.2013 DE 102013018710
(43) Veröffentlichungstag der Anmeldung: 14.09.2016
(73) Patentinhaber: SEW-EURODRIVE GmbH & Co. KG, 76646 Bruchsal (DE)
(72) Erfinder: WU, Zili, Tianjin 300060 (CN)
(86) Internationale Anmeldenummer: PCT/EP2014/002830
(87) Internationale Veröffentlichungsnummer: WO 2015/067343

(56) Entgegenhaltungen:
- WO-A1-2010/108600
- CN-A- 102 463 256
- CN-U- 201 944 239
- GB-A- 561 876
- JP-U- S5 629 342
- JP-Y- S 427 068
- US-A- 2 676 671
- US-A- 3 029 661
- US-A- 3 529 698
- US-A1- 2006 156 861
- US-A1- 2007 251 348

## Beschreibung

Die Erfindung betrifft ein Getriebe mit Gehäuse.

Es ist allgemein bekannt, dass ein Gehäuse eines Getriebes Lageraufnahmen aufweist, in denen die Lager der Wellen des Getriebes aufnehmbar sind und die entsprechenden Kräfte abgeleitet werden.

**Aus der** US 3 029 661 A **ist als nächstliegender Stand der Technik ein Getriebe bekannt.**

**Aus der** JP S42 7068 Y1 **ist ein Schneckengetriebe bekannt.**

**Aus der** US 2 676 671 A **ist ein Schmiersystem für ein Getriebe bekannt.**

**Aus der** WO 2010/108600 A1 **ist ein zumindest teilweise mit Öl befülltes Getriebe bekannt.**

**Aus der** GB 561 876 A **ist eine verbesserte Konstruktion eines Getriebegehäuses bekannt.**

**Aus der** CN 102 463 256 A **ist ein mehrstufiges Parallelwellengetriebe bekannt.**

**Aus der** US 2006/156861 A1 **ist ein Getriebegehäuse bekannt, das ein Oberteil und ein Unterteil aufweist.**

**Aus der** US 3 529 698 A **ist ein Getriebe mit einer Sammelvorrichtung für Öl bekannt, die oberhalb des Ölpegels angeordnet ist.**

**Aus der** US 2007/251348 A1 **ist eine Ölpumpvorrichtung für ein Getriebe bekannt.**

**Aus der** CN 201 944 239 U **ist ein mehrstufiges Getriebe bekannt**

**Aus der** JP S56 29342 U **ist eine Vorrichtung für ein Getriebe bekannt.**

Der Erfindung liegt daher die Aufgabe zugrunde, die Umwelt zu schonen, insbesondere die Ressourcen zu schonen.

Erfindungsgemäß wird die Aufgabe bei dem Gehäuse für ein Getriebe nach den in Anspruch 1 angegebenen Merkmalen gelöst.

Wichtige Merkmale der Erfindung bei dem Getriebe mit Gehäuse nach Anspruch 1 sind, dass **das Gehäuse ein Gehäuseoberteil und ein Gehäuseunterteil aufweist,**
**insbesondere wobei das Gehäuseoberteil schalenförmig ausgeformt ist, insbesondere halbnussschalenförmig,**
**wobei das Gehäuseoberteil eine den Innenraum des Getriebes zumindest teilweise begrenzende, derart in Längsrichtung und derart in Querrichtung gekrümmte, insbesondere konkave, Deckenwandung aufweist, dass zur Deckenwandung hochgespritzte Öltröpfchen in oder entgegen der Querrichtung entlang der Deckenwandung abtropfen in eine an der Innenseite des Gehäuseoberteils ausgeformte Rinne,**
**insbesondere wobei der Betrag der Steigung, insbesondere also die Neigung der Deckenwandung gegenüber der horizontalen Richtung, der Deckenwandung in Querrichtung mit zunehmendem Abstand vom höchsten Punkt der Deckenwandung** , **insbesondere vom Punkt der Deckenwandung mit verschwindender Steigung, schneller zunimmt als in Längsrichtung.**

Von Vorteil ist dabei, dass die Deckenwandung derart geneigt ausgeführt ist, dass von einem Verzahnungsteil, wie Zahnrad, zur Deckenwandung heraufgespritzte Öltröpfchen zu einer Rinne im Gehäuseoberteil abgeleitet werden und von dort zu schmierende Teile mit Schmieröl beschickbar sind.

Wichtige Merkmale der Erfindung bei dem Getriebe mit Gehäuse nach Anspruch 2 sind, dass **das Gehäuse ein Gehäuseoberteil und ein Gehäuseunterteil aufweist,**
**insbesondere wobei das Gehäuseoberteil schalenförmig ausgeformt ist, insbesondere halbnussschalenförmig,**
**wobei das Gehäuseoberteil eine den Innenraum des Getriebes zumindest teilweise begrenzende, in Längsrichtung und in Querrichtung gekrümmte, insbesondere konkave, Deckenwandung aufweist,**
**das Gehäuseoberteil an seiner Innenseite eine am Gehäuseoberteil ausgeformte Rinne, insbesondere einstückig, also einteilig, ausgeformte Rinne aufweist,**
**wobei der Betrag der Steigung der Deckenwandung, insbesondere also die Neigung der Deckenwandung gegenüber der horizontalen Richtung, in Querrichtung mit zunehmendem Abstand vom höchsten Oberflächenpunkt der Deckenwandung** , **insbesondere also vom Oberflächenpunkt der Deckenwandung mit verschwindender Steigung, schneller zunimmt als in Längsrichtung,**

Von Vorteil ist dabei, dass die Deckenwandung derart geneigt ausgeführt ist, dass von einem Verzahnungsteil, wie Zahnrad, zur Deckenwandung heraufgespritzte Öltröpfchen zu einer Rinne im Gehäuseoberteil abgeleitet werden und von dort zu schmierende Teile mit Schmieröl beschickbar sind. Bevorzugt werden die Öltröpfchen entlang der Deckenwandung in oder entgegen der Querrichtung gefördert, so dass die in und oder entgegen der Querrichtung angeordneten Rinnen beschickt werden mit Öl.

Bei einer vorteilhaften Ausgestaltung ist **die Querrichtung parallel zur Wellenachse der abtreibenden Welle ausgerichtet,**
**wobei die Längsrichtung senkrecht und/oder transversal zur Querrichtung ausgerichtet ist, insbesondere wobei die Längsrichtung parallel zu der von einer Wellenachse einer Zwischenwelle und von einer Wellenachse einer abtreibenden Welle aufgespannten Ebene ausgerichtet ist.**

Bei einer vorteilhaften Ausgestaltung ist **die Deckenwandung einem Gewölbe entsprechend ausgeformt.** Von Vorteil ist dabei, dass die heraufspritzenden Öltröpfchen entlang des Gewölbes abgeleitet werden, um dann an der Seite heruntergeleitet zu werden in eine an der Innenseite ausgeformte Rinne.

Bei einer vorteilhaften Ausgestaltung wird **aus der Rinne Schmieröl zu schmierenden Teilen, wie Lager und/oder Verzahnungsteil, zugeführt wird.** Von Vorteil ist dabei, dass mittels des Heraufspritzens von Öl an die Deckenwandung das Öl in die Rinne gefördert wird. Zusätzlich ist mittels der Pumpwirkung des mit der Wanne zusammenwirkenden Zahnrads Schmieröl in die rinne beförderbar, so dass genügend Öl für die Schmierung der zu schmierenden Teile, wie Lager oder im Eingriff stehende Verzahnungsteile, zur Verfügung steht.

Bei einer vorteilhaften Ausgestaltung umgibt eine Wanne zur Ölführung und Verminderung von Plantschverlusten einen Umfangsabschnitt eines Verzahnungsteils, insbesondere Zahnrades, insbesondere in radialer und in axialer Richtung,
wobei die Wanne zumindest aus drei Teilen, also zumindest aus einer Bodenplatte und zwei Seitenwänden, zusammengesetzt ist, wobei die Bodenplatte mit den beiden Seitenwänden schraubverbunden ist,
wobei die Wanne am Gehäuse befestigt ist,
wobei die Wanne eine Ausnehmung, insbesondere einen Kanal, aufweist, insbesondere an ihrem tiefsten Oberflächenbereich, insbesondere also an dem den größten Radialabstand aufweisenden Oberflächenbereich,
insbesondere wobei bei Drehbewegung des Zahnrades Öl aus dem Ölsumpf des Getriebes durch die Ausnehmung hindurch zwischen Wanne und Zahnrad gefördert wird, insbesondere auf eine höhere Position als der Pegel des Ölsumpfes,
wobei Bodenplatte und die Seitenwände Stanz-Biegeteile sind.

Von Vorteil ist dabei, dass mittels des Zahnrads Öl aus dem Ölsumpf des Getriebes an eine höher gelegene Stelle, wie beispielsweise ein Zwischenspeicher oder eine Sammelrinne, förderbar ist und somit von dort Lager und in Eingriff stehende Verzahnungen schmierbar sind mit Schmieröl. Außerdem sind mittels der Wanne, welche zumindest abschnittsweise der Kontur des Zahnrads, also der Einhüllenden des drehenden Zahnrads, also dem zylindrischen Raumberiech, welcher durch das drehende Zahnrad berührt ist, entsprechend folgt, Plantschverluste verminderbar. Hierzu ist der Spalt zwischen dem drehenden Zahnrad und der Wanne, insbesondere der Bodenplatte der Wanne gering auszuführen. Die Bodenplatte ist mit ihrem dem Zahnrad zugewandten Oberflächenabschnitt auf einem Radialabstand angeordnet, der nur gering beabstandet ist von dem Radialabstand der Köpfe der Verzahnung des Zahnrades zur Achse des Zahnrades. #Somit erstreckt sich der dem Zahnrad zugewandte Oberflächenabschnitt der Bodenplatte im Wesentlichen in Umfangsrichtung und in axialer Richtung, weist aber mit Ausnahme einer Ausnehmung stets denselben Radialabstand zur Achse des Zahnrades, insbesondere zur Achse derjenigen Welle, mit welcher das Zahnrad drehfest verbunden ist.

Die Ausführung der Wanne aus nur drei die Wanne bildenden Teilen, nämlich Bodenplatte und Seitenwänden, ermöglicht eine besonders kostengünstige Herstellung durch Schraubverbinden dieser Teile.

Bei einer vorteilhaften Ausgestaltung ist der Abstand, insbesondere der in radialer Richtung bestehende Abstand, zwischen der Bodenplatte und den Köpfen der Verzahnung im von der Wanne überdeckten Umfangswinkelbereich konstant. Von Vorteil ist dabei, dass ein geringer Spalt als Abstand genügt, um die Pumpwirkung auszuführen. Somit sind die Plantschverluste verringerbar.

Bei einer vorteilhaften Ausgestaltung weist die Bodenplatte in radialer Richtung sich erstreckende Laschenabschnitte auf, an welchen die Seitenwände mittels Schraubverbindung schraubverbunden sind. Von Vorteil ist dabei, dass die Laschenabschnitt in einfacher Weise herstellbar sind durch Biegen eines Stanzblechs. Außerdem ist der Laschenabschnitt parallel ausrichtbar zur Seitenwand, also senkrecht zum in Umfangsrichtung und in axialer Richtung sich erstreckendem Oberflächenabschnitt der Bodenplatte. Somit ist eine einfache stabile Verbindung zwischen Bodenplatte und Seitenwand erzielbar. Bei einer Getriebebaureihe, bei welcher verschieden große Zahnräder zum Einsatz gelangen, da für jedes Getriebe der Getriebebaureihe eine jeweils verschiedene Übersetzungszahl ausführbar ist. Somit ist aber die Bodenplatte auf jeweils angepasstem Radialabstand zu befestigen und somit die axial ausgerichteten Schrauben der Schraubverbindung zwischen Bodenplatte und Seitenwand entsprechend auf verschiedenem Radialabstand.

Bei einer vorteilhaften Ausgestaltung weist eine Seitenwand eine Kennzeichnung auf, an der ein Bohrloch zum Durchführen einer Schraube der Schraubverbindung anbringbar ist. Von Vorteil ist dabei, dass je nach Übersetzungszahl des Getriebes oder Größe, insbesondere Kopfkreisdurchmesser, des Zahnrades ein Bohrloch auf dem jeweils unterschiedlichen gekennzeichneten Radialabstand anbringbar ist und somit die Wanne auf verschiedenem Radialabstand anordenbar ist.

Bei einer vorteilhaften Ausgestaltung ist die Ausnehmung, insbesondere der Kanal, begrenzt durch die Bodenplatte und die beiden Seitenwände. Von Vorteil ist dabei, dass eine Ölfördernde Ausnehmung in einfacher Weise und kostengünstig herstellbar ist.

Bei einer vorteilhaften Ausgestaltung ist die Bodenplatte und jede Seitenwand jeweils einstückig, also einteilig, ausgebildet. Von Vorteil ist dabei, dass jedes der drei Teile als Stanzbiegeteil herstellbar ist, also sehr einfach und kostengünstig. Dabei sind sogar die beiden Seitenwände gleichartig ausführbar.

Bei einer vorteilhaften Ausgestaltung ist das Gehäuse für ein Getriebe vorgesehen,
wobei das Gehäuse ein Gehäuseoberteil und ein Gehäuseunterteil aufweist,
**wobei** das Gehäuseoberteil einen rahmenartigen Tragabschnitt aufweist, an dem Wandabschnitte angeformt sind,
wobei der rahmenartige Tragabschnitt mit den Wandabschnitten einstückig, also einteilig, ausgeformt ist, insbesondere als Gussteil, insbesondere als Stahlgussteil.

Von Vorteil ist dabei, dass nur der Tragabschnitt viel Material, also auch Masse, enthalten muss, nicht aber die Wandabschnitte. Somit ist auf materialsparende Weise erreichbar, dass hohe Kräfte übertragen werden.

Bei einer vorteilhaften Ausgestaltung ist die größte Wandstärke der Wandabschnitte kleiner als die größte Wandstärke des Tragabschnitts. Von Vorteil ist dabei, dass die Wandabschnitte mit dünner Wandstärke ausführbar sind und somit das Gehäuse materialsparend ausführbar ist.

Bei einer vorteilhaften Ausgestaltung weist der rahmenartige Tragabschnitt des Gehäuseoberteils eine erste und eine zweite Querrippe auf, insbesondere wobei die Querrippen sich hauptsächlich in horizontaler Richtung erstrecken, insbesondere also in horizontaler Richtung weiter ausgedehnt sind als in jeder hierzu transversalen Richtung,
wobei der rahmenartige Tragabschnitt zwei erste Rippen aufweist,
wobei die zwei ersten Rippen voneinander beabstandet und sind und jeweils mit der ersten Querrippe verbunden sind, insbesondere an zwei voneinander beabstandeten Stellen,
insbesondere wobei die ersten Rippen sich hauptsächlich in vertikaler Richtung erstrecken, insbesondere also in vertikaler Richtung weiter ausgedehnt sind als in jeder hierzu transversalen Richtung,
wobei die zwei zweiten Rippen voneinander beabstandet sind und jeweils mit der zweiten Querrippe verbunden sind, insbesondere an zwei voneinander beabstandeten Stellen,
insbesondere wobei die zweiten Rippen sich hauptsächlich in vertikaler Richtung erstrecken, insbesondere also in vertikaler Richtung weiter ausgedehnt sind als in jeder hierzu transversalen Richtung. Von Vorteil ist dabei, dass eine besonders hohe Stabilität mit geringem Materialaufwand erreichbar ist. Denn der rahmenartige Tragabschnitt weist eine rechteckförmige Gestalt auf, bei der das Rechteck an seinen beiden gegenüberliegenden Seiten aus der Ebene des Rechtecks herausgebogen ist, so dass die abgebogenen Bereiche im Wesentlichen in zur Ebene senkrechten weiteren Ebenen angeordnet sind, die zueinander beabstandet und parallel sind.

Bei einer vorteilhaften Ausgestaltung weist jede erste Rippe und jede zweite Rippe an ihrem von der jeweiligen Querrippe abgewandten Endbereich eine Tragöse auf. Von Vorteil ist dabei, dass die beim Transport ins Gehäuse eingeleiteten Kräfte direkt in den rahmenartige Tragabschnitt eingeleitet werden und nicht in Wandabschnitte mit dünner Wandstärke.

Bei einer vorteilhaften Ausgestaltung ist eine erste Rippe an ihrem Endbereich mit einem Balken, insbesondere Tragbalken, verbunden, der an seinem anderen Ende mit dem Endbereich einer zweiten Rippe verbunden ist,
wobei die andere Rippe an ihrem Endbereich mit einem Balken, insbesondere Tragbalken, verbunden ist, der wiederum an seinem anderen Ende mit dem Endbereich der anderen zweiten Rippe verbunden ist,
insbesondere wobei die beiden Balken parallel und voneinander beabstandet angeordnet sind. Von Vorteil ist dabei, dass eine hohe Stabilität mittels der Verstrebungen erreichbar ist.

Bei einer vorteilhaften Ausgestaltung ist eine Welle des Getriebes mittels eines Lagers im Gehäuse gelagert,
wobei ein erster Teil der Lageraufnahme im Gehäuseoberteil und ein zweiter Teil der Lageraufnahme im Gehäuseunterteil angeordnet ist,
wobei der erste Teil der Lageraufnahme als aufgedickter Abschnitt ausgeführt ist und mit demjenigen Bereich der Querrippen verbunden ist, an dem auch die jeweilige Rippe verbunden ist. Von Vorteil ist dabei, dass eine zusätzliche Verstrebung des rahmenartigen Tragabschnitts mittels der aufgedickten Bereiche vorgesehen ist.

Bei einer vorteilhaften Ausgestaltung verschließt ein Gehäusedeckel eine Öffnung des Gehäuseoberteils 1, welche von dem rahmenförmigen Tragabschnitt umfasst ist, insbesondere mit Abstand, insbesondere so dass der rahmenförmige Tragabschnitt die Öffnung nicht direkt berührt sondern von der Öffnung beabstandet ist. Von Vorteil ist dabei, dass durch die Öffnung Getriebeteile inspizierbar sind und Wartungsarbeiten ausführbar sind. Dabei fließt auch kein Schmieröl aus dem Getriebe heraus, da die Öffnung an der Oberseite des Gehäuseoberteils angeordnet ist.

Wichtige Merkmale bei dem Getriebe sind, dass es mit einem Gehäuse vorgesehen ist,
wobei
eine Welle des Getriebes mittels eines Lagers im Gehäuse gelagert ist,
wobei ein erster Teil der Lageraufnahme im Gehäuseoberteil und ein zweiter Teil der Lageraufnahme im Gehäuseunterteil angeordnet ist,
wobei der erste Teil der Lageraufnahme als aufgedickter Abschnitt ausgeführt ist und mit demjenigen Bereich der Querrippen verbunden ist, an dem auch die jeweilige Rippe verbunden ist.

Von Vorteil ist dabei, dass eine hohe Verdrehsteifigkeit und eine hohe mechanische Stabilität erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erfindungsgemäßes Getriebegehäuse für ein Getriebe in einer ersten Blickrichtung in Schrägansicht gezeigt, das aus einem Gehäuseoberteil 1 und einem Gehäuseunterteil 2 zusammengesetzt ist..

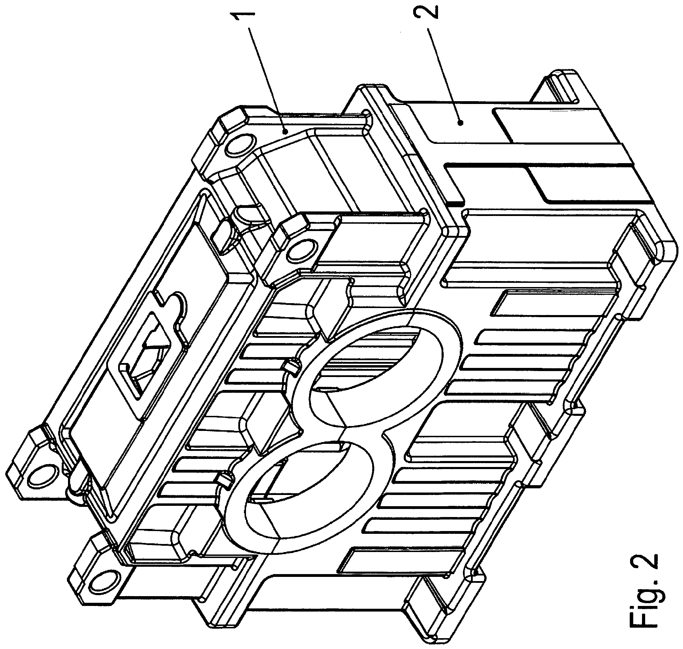

In der Figur 2 ist das erfindungsgemäße Getriebegehäuse in einer anderen Blickrichtung in Schrägansicht gezeigt.

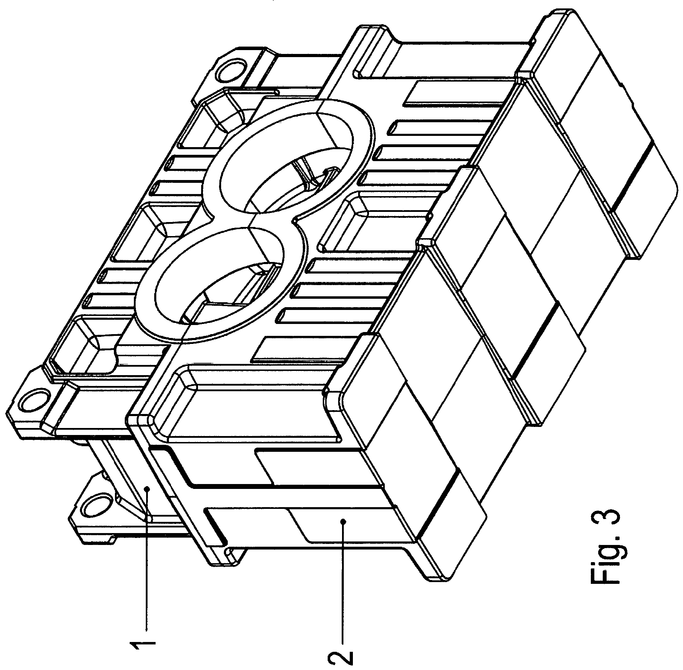

In der Figur 3 ist das erfindungsgemäße Getriebegehäuse in einer dritten Blickrichtung in Schrägansicht gezeigt.

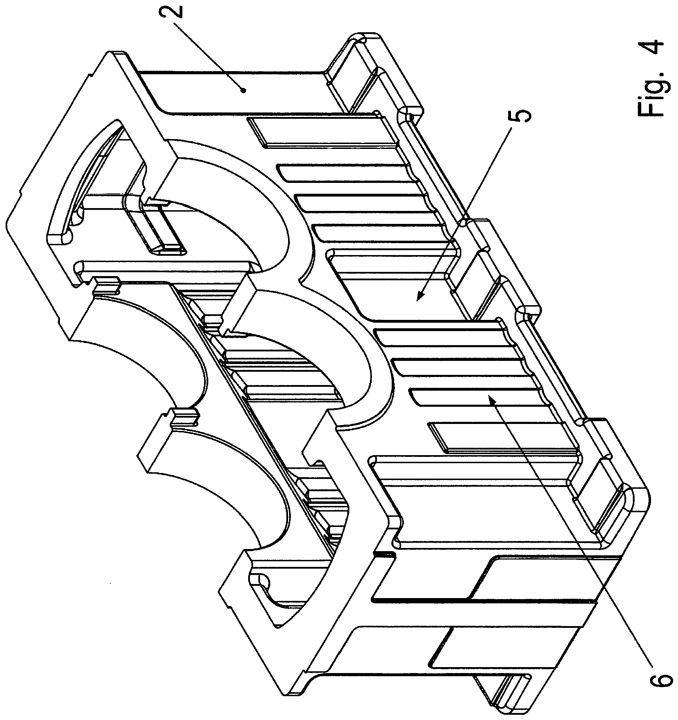

In der Figur 4 ist das Gehäuseunterteil 2 in Schrägansicht dargestellt.

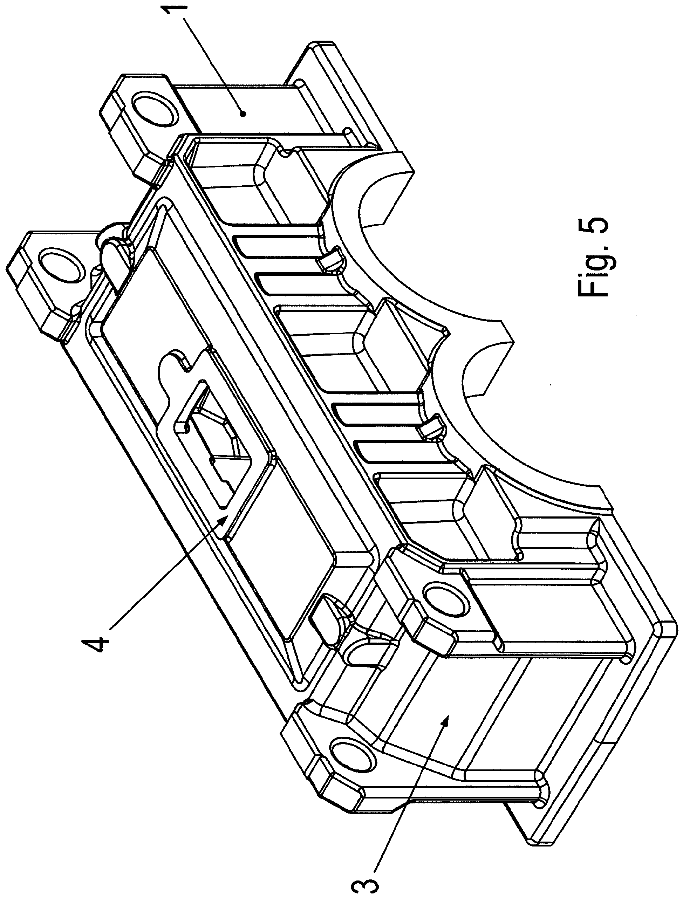

In der Figur 5 ist das Gehäuseoberteil 1 in Schrägansicht dargestellt.

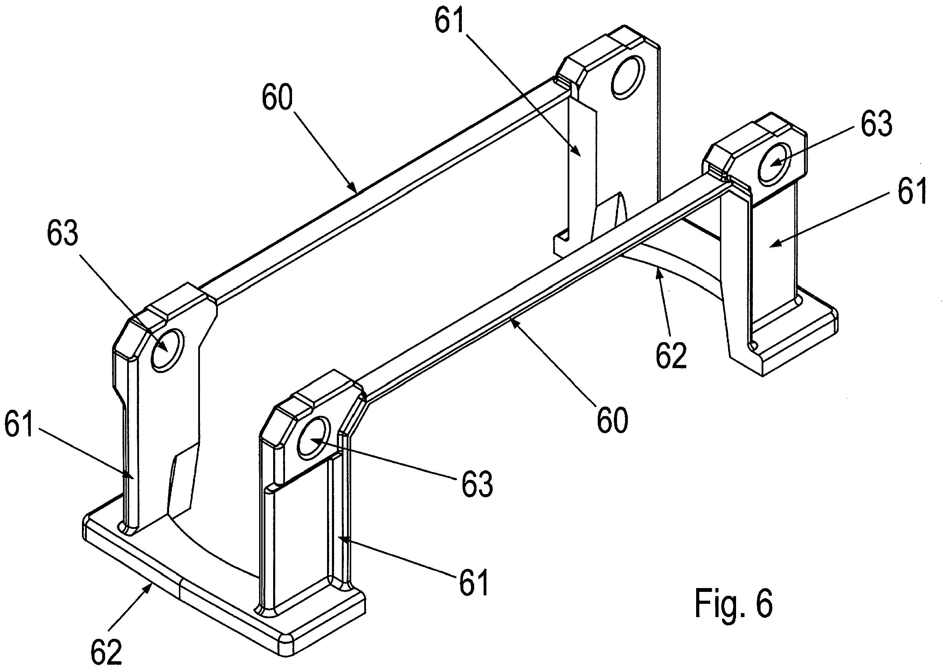

In der Figur 6 ist der rahmenartige Tragabschnitt des Gehäuseoberteils 1 dargestellt.

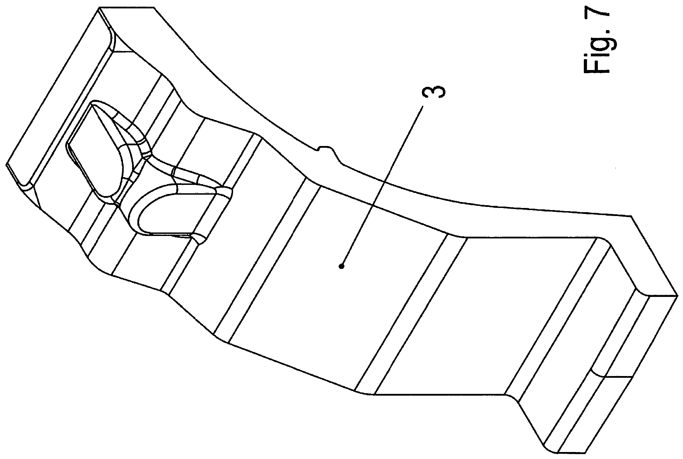

In der Figur 7 ist als Ausschnitt aus dem Gehäuseoberteil 1 ein Seitenwandabschnitt 3 gezeigt, welcher in den rahmenartigen Tragabschnitt eingefügt ist.

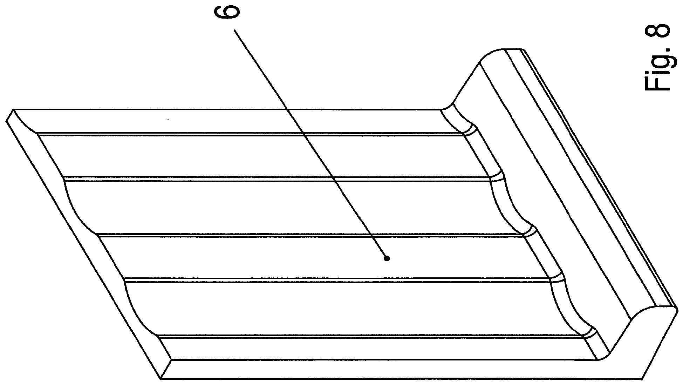

In der Figur 8 ist als Ausschnitt aus dem Gehäuseunterteil 2 ein Wandabschnitt mit Wellenstruktur gezeigt, insbesondere also einen konkav-konvex ausgebildetem Wandabschnitt.

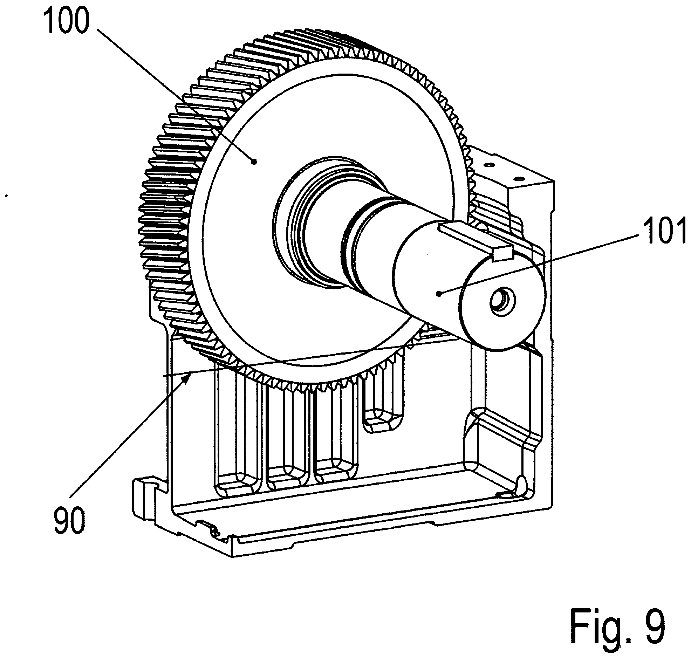

In der Figur 9 ist der Ölstand 90 dargestellt.
In der Figur 10 ist ein Zahnrad 100 des Getriebes gezeigt, das drehfest auf einer im Getriebegehäuse gelagerten Welle 101 angeordnet ist und von einer am Gehäuseunterteil 2 befestigten Wanne zumindest teilweise umgeben ist.

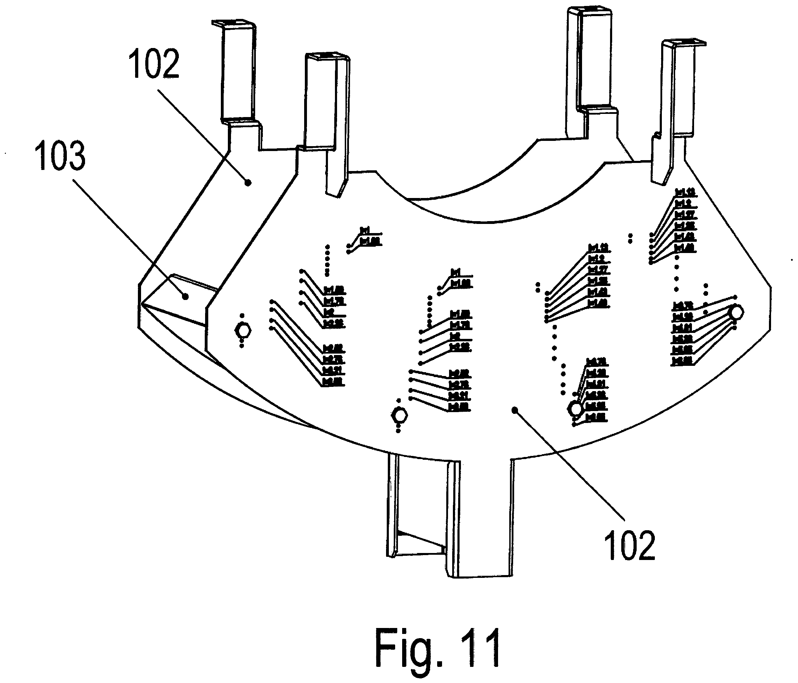

In der Figur 11 ist die Wanne selbst in Schrägansicht gezeigt, wobei die Wanne Seitenwände 102 und eine Bodenplatte 103 aufweist.
In der Figur 12 ist eine Seitenwand 102 der Wanne gezeigt.

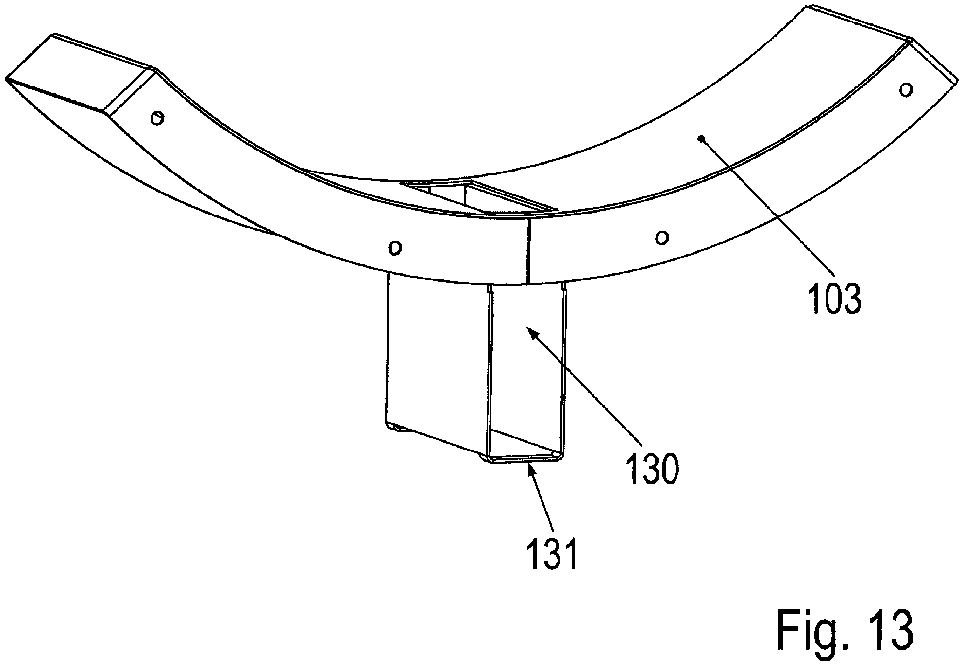

In der Figur 13 ist die Bodenplatte 103 der Wanne gezeigt.

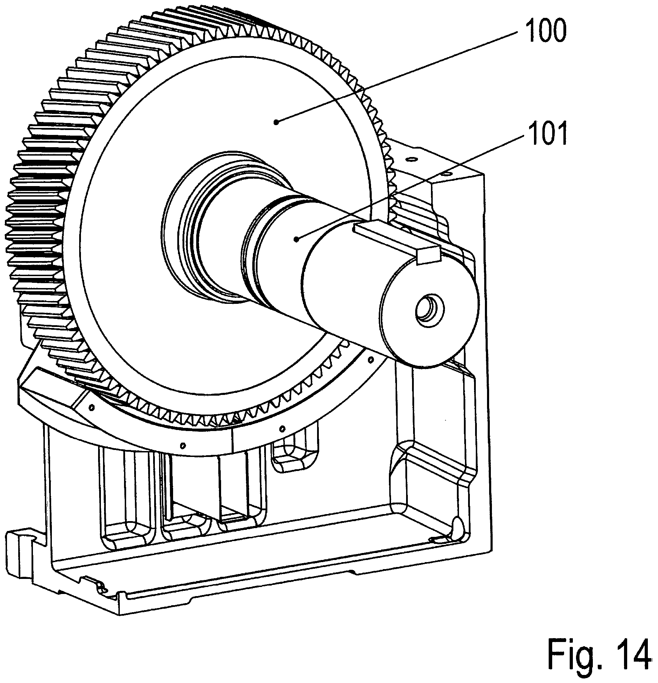

In der Figur 14 ist die Wanne ohne vordere Seitenwand 102 gezeigt, so dass das Zahnrad in Schrägansicht sichtbar ist, wobei ein erster Ausschnitt gekennzeichnet ist.

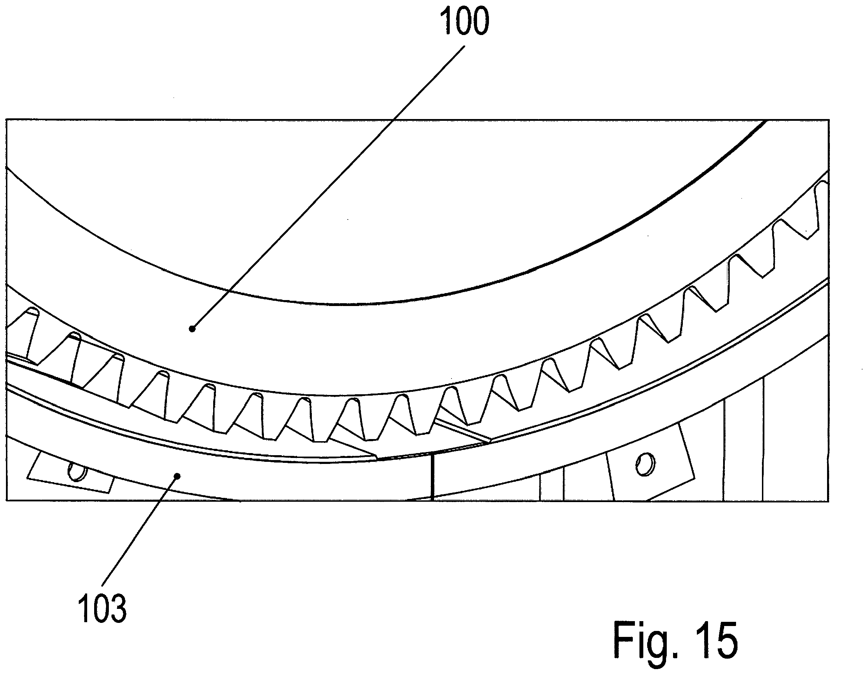

In der Figur 15 ist der erste Ausschnitt der Figur 14 vergrößert gezeigt, wobei ein zweiter Ausschnitt gekennzeichnet ist.

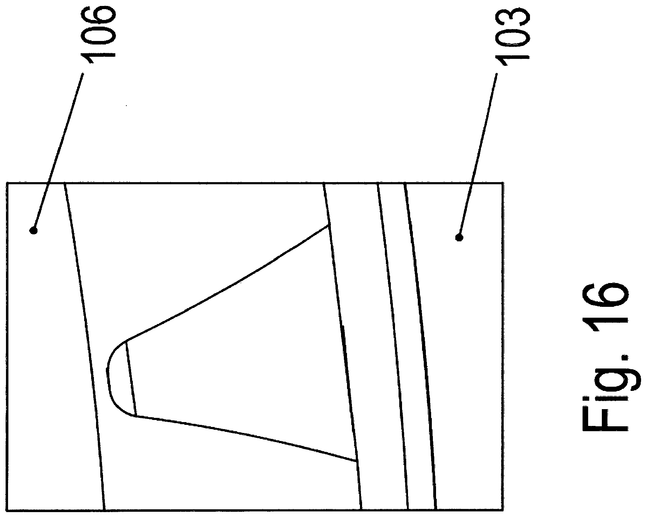

In der Figur 16 ist der zweite Ausschnitt der Figur 15 vergrößert gezeigt.
In der Figur 17 ist das Gehäuse des Getriebes in Längsrichtung angeschnitten dargestellt, so dass die Krümmung der Dachwandung, insbesondere der bogenförmige Verlauf in Längsrichtung, sichtbar ist.
In der Figur 18 ist das Gehäuse des Getriebes in Querrichtung angeschnitten dargestellt, so dass die Krümmung der Dachwandung, insbesondere der bogenförmige Verlauf in Querrichtung, sichtbar ist.

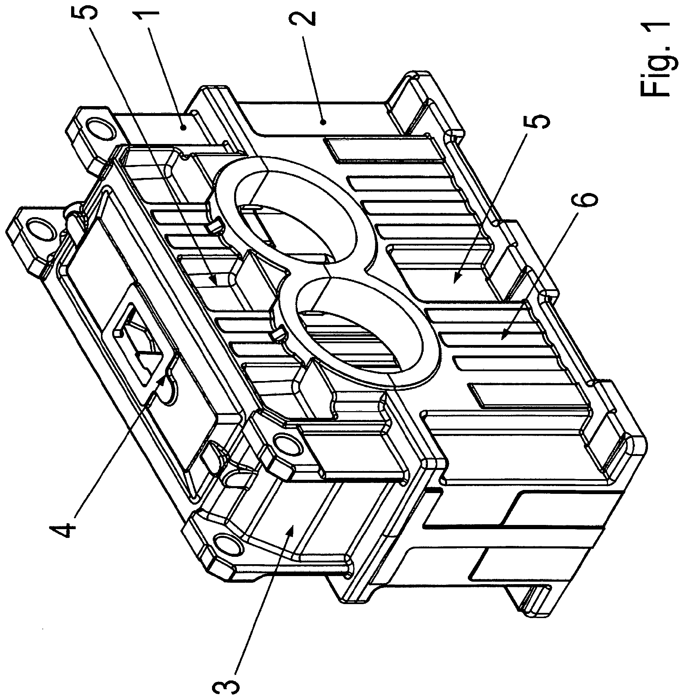

Wie in Figur 1 gezeigt, ist das Gehäuseunterteil 2 unter dem Gehäuseoberteil 1 angeordnet. In vertikaler Richtung ist also das Gehäuseoberteil 1 oberhalb des Gehäuseunterteils 2 angeordnet.

Das Gehäuseoberteil 1 weist einen rahmenartigen Tragabschnitt auf, welcher den wesentlichen Teil der Kräfte aufnimmt und durchleitet. Die restlichen Abschnitte des Gehäuseoberteils 1 sind nur zum öldichten Einhausen des Getriebeinneren ausgebildet, also mit dünnerer Wandstärke ausgebildet als der Tragabschnitt, und schmiegen sich an den Tragabschnitt an.

Somit ist das Gehäuseoberteil 1 und auch das Gehäuseunterteil 2 schalenartig ausgeformt.

Der rahmenartige Tragabschnitt des Gehäuseoberteils 1 weist eine erste Querrippe 62 auf. Diese erstreckt sich hauptsächlich in horizontaler Richtung.

Zwei erste Rippen 61 sind voneinander beabstandet und sind jeweils mit der ersten Querrippe 61 verbunden, insbesondere an zwei voneinander beabstandeten Stellen.

Die ersten Rippen 61 erstrecken sich hauptsächlich in vertikaler Richtung, sind also in vertikaler Richtung weiter ausgedehnt als in jeder hierzu transversalen Richtung.

Der rahmenartige Tragabschnitt des Gehäuseoberteils 1 weist auch eine zweite Querrippe 62 auf. Diese erstreckt sich hauptsächlich in horizontaler Richtung.

Zwei zweite Rippen 61 sind voneinander beabstandet und sind jeweils mit der zweiten Querrippe 61 verbunden, insbesondere an zwei voneinander beabstandeten Stellen.

Die zweiten Rippen 61 erstrecken sich hauptsächlich in vertikaler Richtung, sind also in vertikaler Richtung weiter ausgedehnt als in jeder hierzu transversalen Richtung..

Jede erste Rippe 61 und jede zweite Rippe 61 weist an ihrem von der jeweiligen Querrippe abgewandten Endbereich eine Tragöse 63 auf. Somit ist das Getriebe mittels Haken oder Seil aufnehmbar an den Tragösen und einfach transportierbar. Die beim Transport auftretenden Kräfte werden als an den Tragösen 63 in die Endbereiche und somit den rahmenartigen Tragabschnitt eingeleitet. Somit wird das Getriebegehäuse nur unwesentlich verformt und bleibt unbeschädigt.

Eine erste Rippe 61 ist an ihrem Endbereich mit einem Balken 60, insbesondere Tragbalken, verbunden, der an seinem anderen Ende mit dem Endbereich einer zweiten Rippe 61 verbunden ist. Ebenso ist die andere Rippe 61 an ihrem Endbereich mit einem Balken 60, insbesondere Tragbalken, verbunden, der wiederum an seinem anderen Ende mit dem Endbereich der anderen zweiten Rippe 61 verbunden ist. Die beiden Balken 60 sind parallel und voneinander beabstandet angeordnet.

Wie oben beschrieben, sind an dem so aus den Rippen 61, Querrippen 62 und Balken 60 gebildeten rahmenartigen Tragabschnitt des Gehäuseoberteils 1 Wandabschnitte angeschmiegt, so dass das schalenartige Gehäuseoberteil einteilig ausformbar ist, insbesondere als Gussteil.

Hierbei sind also die Wandabschnitte, insbesondere auch zwei Seitenwandabschnitte 3 und der Wandabschnitt mit konkav-konvexer Wellenstruktur an das rahmenartige Tragabschnitt angeformt und angeschmiegt und einstückig ausgebildet.

Die Balken 60 erstrecken sich hauptsächlich in horizontaler Richtung, sind also horizontalweiter ausgedehnt als in jeder hierzu transversalen Richtung.

Die Realisierung des rahmenartigen Tragabschnitts erfolgt also durch eine Aufdickung der Wandstärke.

Zusätzlich sind auch aufgedickte Bereiche am Gehäuseoberteil 1 vorgesehen, welche als Lageraufnahme für zumindest einen Teil, insbesondere die Hälfte, des Umfangs eines Außenrings eines Lagers vorgesehen sind. Diese bogenartig ausgeformten aneinander grenzenden, aufgedickten Bereiche sind mit den Querrippen 62 verbunden, insbesondere jeweils in demjenigen Endbereich, in welchem die jeweilige Rippe 61 verbunden sind.

Die konkav-konvexe Wellenstruktur der Wandabschnitte vergrößert die Oberfläche und verringert somit den Wärmeübergangswiderstand zur Umgebungsluft. Eine besonders starke Vertiefung ist hierbei als Vertiefung 5 für Betätigungsbereich für Schraubverbindungen vorgesehen. Dabei sind die in den Figuren nicht gezeigten Schrauben Verbindungsschrauben, mit welchen das Gehäuseoberteil 1 und das Gehäuseunterteil 2 schraubverbunden sind.

Das Gehäuseunterteil 2 weist eine Wellenstruktur 6 auf, insbesondere einen konkavkonvexen Wandabschnitt, der ebenfalls oberflächenvergrößernd ist und somit den Wärmeübergangswiderstand vom Getriebeinnenraum, insbesondere Schmieröl, zur Umgebungsluft hin verringert.

Der Gehäusedeckel ist zum Verschließen einer Öffnung des Gehäuseoberteils 1 vorgesehen, welche von dem rahmenförmigen Tragabschnitt umfasst ist, insbesondere mit Abstand. Dies bedeutet, dass der rahmenförmige Tragabschnitt die Öffnung nicht direkt berührt sondern von der Öffnung beabstandet ist.

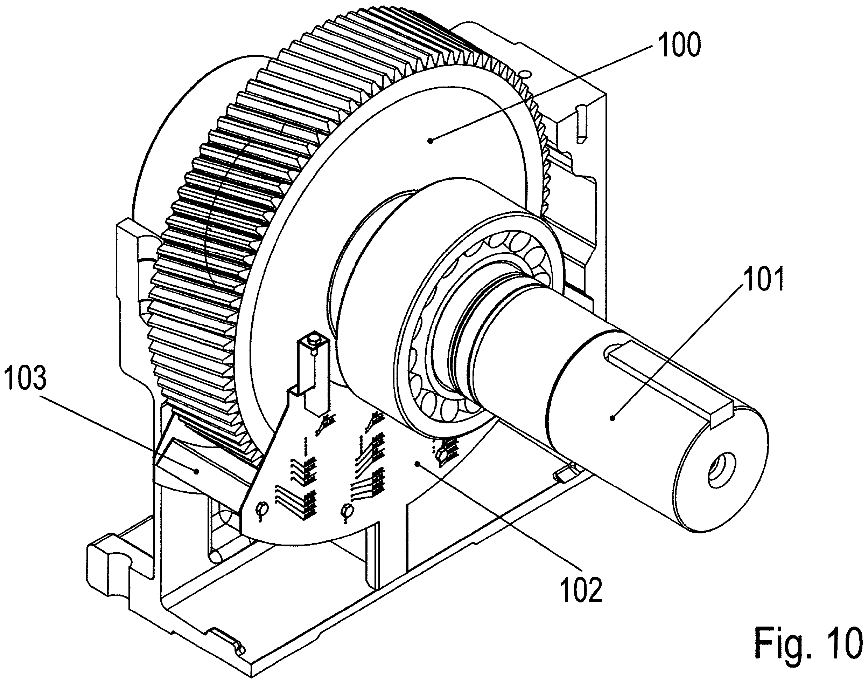

Wie in Figur 10 gezeigt, ist das Zahnrad 100 drehfest mit der Welle 101 verbunden, welche über ein Lager im Gehäuse gelagert ist. Dabei ist das Lager in einer Lageraufnahme des Gehäuses aufgenommen, wobei ein erster Teil der Lageraufnahme im Gehäuseoberteil 1 und ein zweiter Teil der Lageraufnahme im Gehäuseunterteil 2 angeordnet ist.

Der das Zahnrad 100 umgebende untere Raumbereich ist von der Wanne umgeben, wobei die Wanne Seitenwände 102 und eine Bodenplatte 103 aufweist. Sie ist somit aus drei Stücken fertigbar.

Dabei sind die Seitenwände 102 der Wanne an der Bodenplatte 103 befestigt. Die Bodenplatte 103 weist an ihrem tiefsten Bereich eine nach unten gerichtete Ausstülpung 130 auf. Die Ausstülpung 130 ist radial weg vom Zahnrad gerichtet und an ihrem radial äußeren Endbereich offen ausgeführt. Somit gelangt #Schmieröl des Getriebes vom Ölsumpf des Getriebes durch die Ausstülpung 130 bis zum Zahnrad 100. Seitlich, also beidseitig in axialer Richtung, ist die Ausstülpung verschlossen durch einen jeweiligen Laschenabschnitt 120 der Seitenwände 102, so dass ein radial zum Zahnrad 100 durchgehender Kanal gebildet ist.

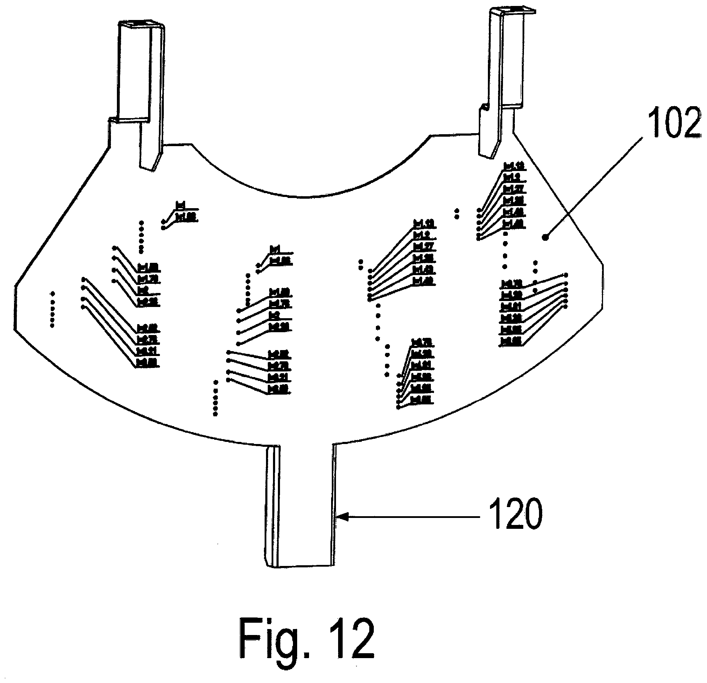

Wie aus Figur 12 ersichtlich, sind die Seitenwände 102 jeweils als Blechteil ausgestanzt und weisen an ihrer axialen Außenseite Kennzeichnungen auf, welche die Positionen einzubringender Bohrlöcher kennzeichnen, insbesondere abhängig von der Übersetzungszahl des Getriebes und/oder Verzahnungsdaten des Zahnrades 100.

Durch die Bohrlöcher hindurch sind Schrauben geführt, welche eine Schraubverbindung zwischen Bodenplatte 103 und jeweiliger Seitenwand 102 ausführbar machen.

Somit ist je nach Größe beziehungsweise anderen Verzahnungsdaten die Bodenplatte auf einem optimalen Radialabstand zur Zahnradmittelachse anordenbar.

Die Bodenplatte 103 ist ebenfalls als Stanz-Biegeteil gefertigt und weist einen U-förmigen Querschnitt auf. Dabei ist sie derart gebogen ausgeführt, dass der Abstand zwischen der Verzahnung, insbesondere den Köpfen der im selben Umfangswinkel wie die Bodenplatte 103 sich befindenden Zähne der Verzahnung des Zahnrades 100 konstant ist. Es ist also ein schmaler Spalt zwischen diesen Zahnköpfen und der Bodenplatte 103 vorgesehen.

Bei Drehbewegung des Zahnrades 100 entsteht somit eine Pumpwirkung, da das in den Zahnlücken sich befindende Schmieröl mit höherer Geschwindigkeit bewegt wird als das Schmieröl im Kanal. Auf diese Weise wird also Schmieröl durch den Kanal vom Ölsumpf zum Zahnrad 100 befördert und von diesem dann mitbewegt

Die Wanne vermindert auch die Plantschverluste bei Bewegung des Zahnrads 100. Denn das Eintauchen der Zähne der Verzahnung des Zahnrads 100 findet in dem von der Wann umgebenen Raumberiech statt.

Die U-förmige gebogene Bodenplatte 103 ist mit Ausnehme der Laschenabschnitte 120 und der Ausstülpung 130 kreisförmig in Umfangsrichtung gebogen, so dass der Abstand zwischen den Zähnen der Verzahnung des Zahnrades 100 und der Bodenplatte 103 im entsprechenden Umfangswinkelbereich im Wesentlichen konstant ist.

Die Laschenabschnitte 120 sind nach radial außen gerichtet, so dass die jeweilige Seitenwand 102 in axialer Richtung an die Bodenplatte 103, insbesondere an deren Laschenabschnitte 120, andrückbar und schraubverbindbar ist.

Mittels der Pumpwirkung des Zahnrades 100 in Zusammenwirkung mit der Wanne wird Öl auf eine höher als der Ölpegel des Ölsumpfes liegende Position gepumpt und von dort über einen Zwischenspeicher oder direkt zu den zu schmierenden Stellen, wie Lager oder im Eingriff stehende Verzahnungen, geführt. Hierzu sind entsprechende Leitungen oder Rohre vorgesehen.

Die Ausstülpung 130 ist mittels Herausbiegen aus der Urform des Bodenplatte 103 herstellbar. Hierzu ist ein Stanzblech derart gebogen, dass zwei kreisabschnittsförmig gebogene Berieche über einen im Wesentlichen rechteckförmig gebogenen Bereich voneinander beabstandet sind. Danach werden die kreisabschnittsförmig gebogenen Beriech aneinander angedrückt und bilden somit den kreisförmigen Bereich der Bodenplatte 103. Dabei umfassen die kreisabschnittsförmig gebogene Berieche eine Ausnehmung. Der rechteckförmig gebogene Bereich weist ebenfalls eine mittig angeordnete Ausnehmung auf und bildet somit die Ausstülpung 130.

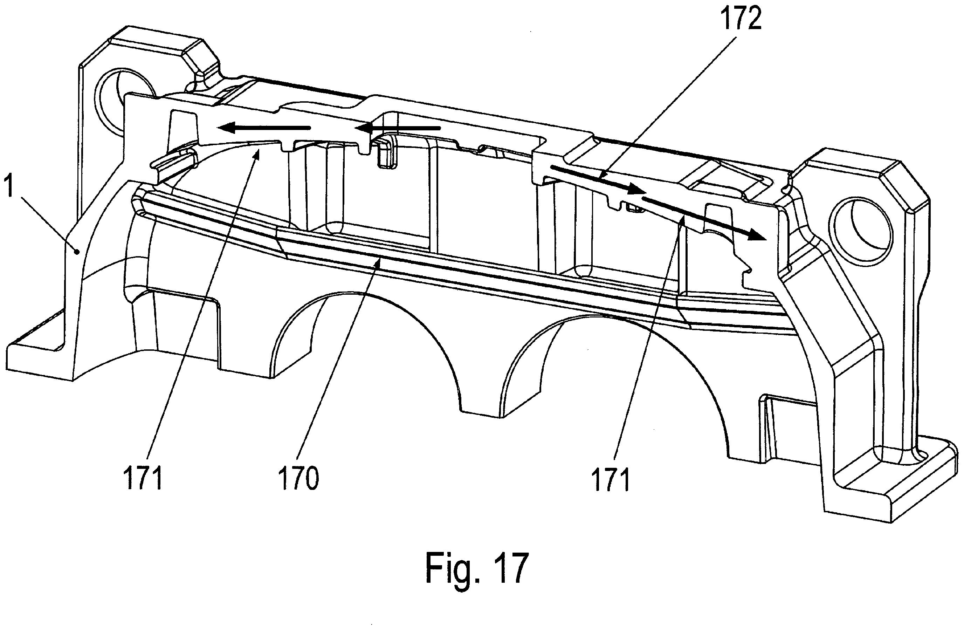

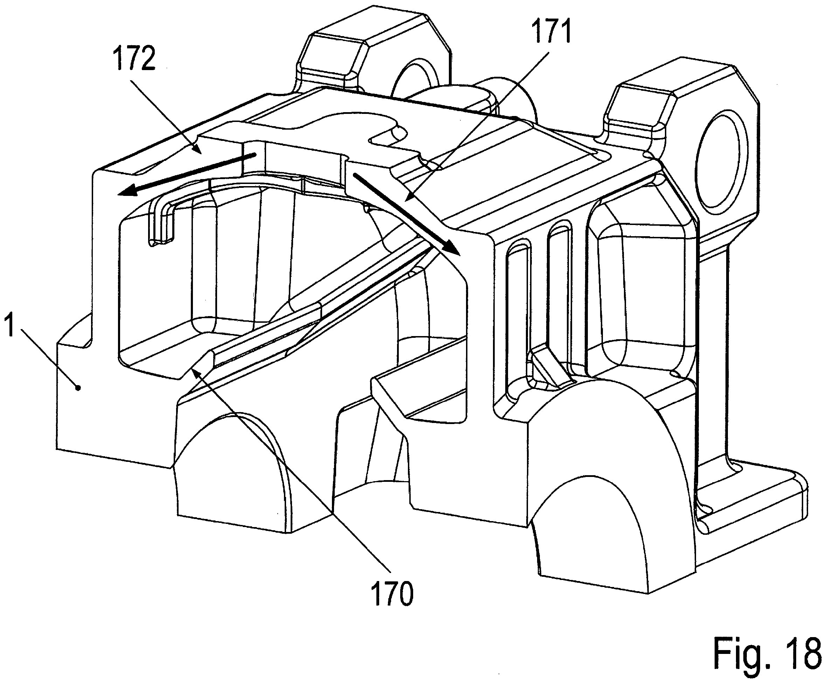

Wie in Figur 17 und 18 ersichtlich ist, ist die Deckenwandung 171 gekrümmt ausgeführt, wobei in Längsrichtung ein anders gekrümmter Verlauf vorhanden ist als in Querrichtung. Dabei ist die Neigung derartig ausgeführt, dass hochspritzende Öltropfen, die beispielsweise von einem Zahnrad 100 des Getriebes an die Decke gespritzt werden, vorzugsweise in Querrichtung entlang der Deckenwand 171 abfließen. Unterhalb der Deckenwand 171, insbesondere unterhalb des in Längsrichtung angeordneten Endbereichs der Deckenwand 171, ist eine Rinne ausgebildet, deren Rinnenwand 170 sich in Längsrichtung erstreckt, also in Längsrichtung weiter erstreckt, als in Querrichtung oder in einer anderen, zur Längsrichtung senkrechten Richtung. Ebenso ist eine weitere Rinne unterhalb des entgegen der Längsrichtung angeordneten Endbereichs der Deckenwand 171 angeordnet.

Somit fließt das hochgespritzte Öl an der Deckenwandung 171 entweder in Längsrichtung oder entgegen der Längsrichtung zum jeweiligen Endbereich der Deckenwandung 171 ab und tropft in die jeweilige Rinne herunter. Von dort wird das Öl zu einem zu schmierenden Lager oder zu einem zu schmierenden Verzahnungsteil geführt.

Die rinne ist am Gehäuseoberteil 1 einstückig, also durch Formgebung des Stahlgussteils, ausgeformt und somit einteilig mit dem Gehäuseoberteil 1 ausgebildet.

Vom höchsten Punkt der konkaven Deckenwandung 171 aus fließt das Öl schneller in Querrichtung ab als in Längsrichtung, weil die Krümmung und Steigung in Querrichtung größer ist.

In Längsrichtung ist die Deckenwandung weiter ausgedehnt als in Querrichtung.

Die Ölflussrichtung 172 an der Deckenwandung 171 ist somit nach außen, also in Längsrichtung beziehungsweise entgegen der Längsrichtung, gerichtet und somit werden die Öltropfen zur Rinne hin befördert.

Somit wird nicht nur durch die Förderwirkung des Zahnrades zusammen mit der Wanne Öl zu einer höheren Position befördert, insbesondere in die Rinne hinein, sondern auch das herumspritzende Öl in die Rinne befördert. Somit steht ausreichend Öl zur Schmierung zur Verfügung.

### Bezugszeichenliste

- 1: Gehäuseoberteil
- 2: Gehäuseunterteil
- 3: Seitenwandabschnitt
- 4: Gehäusedeckel
- 5: Vertiefung für Betätigungsbereich für Schraubverbindungen
- 6: Wellenstruktur, insbesondere konkav-konvexer Wandabschnitt
- 60: Balken
- 61: Rippe
- 62: Querrippe
- 63: Tragösen
- 90: Ölstand
- 100: Zahnrad
- 101: Welle
- 102: Seitenwand
- 103: Bodenplatte
- 120: Laschenabschnitt
- 130: Ausstülpung
- 170: Rinnenwand
- 171: Deckenwandung
- 172: Ölflussrichtung an der Deckenwandung 171

## Patentansprüche

1. **Getriebe mit Gehäuse,**
**das Gehäuse ein Gehäuseoberteil (1) und ein Gehäuseunterteil (2) aufweist,**
**insbesondere wobei das Gehäuseoberteil (1) schalenförmig ausgeformt ist, insbesondere halbnussschalenförmig,**
**wobei das Gehäuseoberteil (1) eine den Innenraum des Getriebes zumindest teilweise begrenzende, derart in Längsrichtung und derart in Querrichtung gekrümmte, insbesondere konkave, Deckenwandung (171) aufweist, dass zur Deckenwandung (171) hochgespritzte Öltröpfchen in oder entgegen der Querrichtung entlang der Deckenwandung (171) abtropfen in eine an der Innenseite des Gehäuseoberteils (1) ausgeformte Rinne,**
**insbesondere wobei der Betrag der Steigung, insbesondere also die Neigung der Deckenwandung (171) gegenüber der horizontalen Richtung, der Deckenwandung (171) in Querrichtung mit zunehmendem Abstand vom höchsten Punkt der Deckenwandung (171), insbesondere vom Punkt der Deckenwandung (171) mit verschwindender Steigung, schneller zunimmt als in Längsrichtung,**
**dadurch gekennzeichnet, dass**
**eine Wanne zur Ölführung und Verminderung von Plantschverlusten einen Umfangsabschnitt eines Verzahnungsteils, insbesondere Zahnrades (100), umgibt, insbesondere in radialer und in axialer Richtung,**
**wobei die Wanne zumindest aus drei Teilen, also zumindest aus einer Bodenplatte (103) und zwei Seitenwänden, zusammengesetzt ist, wobei die Bodenplatte (103) mit den beiden Seitenwänden schraubverbunden ist,**
**wobei die Wanne am Gehäuse befestigt ist,**
**wobei die Wanne eine Ausnehmung, insbesondere einen Kanal, aufweist, insbesondere an ihrem tiefsten Oberflächenbereich, insbesondere also an dem den größten Radialabstand aufweisenden Oberflächenbereich,**
**insbesondere wobei bei Drehbewegung des Zahnrades (100) Öl aus dem Ölsumpf des Getriebes durch die Ausnehmung hindurch zwischen Wanne und Zahnrad (100) gefördert wird, insbesondere auf eine höhere Position, insbesondere in die Rinne, als der Pegel des Ölsumpfes,**
**wobei Bodenplatte (103) und die Seitenwände Stanz-Biegeteile sind.**

2. **Getriebe mit Gehäuse,**
**das Gehäuse ein Gehäuseoberteil (1) und ein Gehäuseunterteil (2) aufweist,**
**insbesondere wobei das Gehäuseoberteil (1) schalenförmig ausgeformt ist, insbesondere halbnussschalenförmig,**
**wobei das Gehäuseoberteil (1) eine den Innenraum des Getriebes zumindest teilweise begrenzende, in Längsrichtung und in Querrichtung gekrümmte, insbesondere konkave, Deckenwandung (171) aufweist,**
**das Gehäuseoberteil (1) an seiner Innenseite eine am Gehäuseoberteil (1) ausgeformte Rinne, insbesondere einstückig, also einteilig, ausgeformte Rinne aufweist,**
**wobei der Betrag der Steigung der Deckenwandung (171), insbesondere also die Neigung der Deckenwandung (171) gegenüber der horizontalen Richtung, in Querrichtung mit zunehmendem Abstand vom höchsten Oberflächenpunkt der Deckenwandung (171), insbesondere also vom Oberflächenpunkt der Deckenwandung (171) mit verschwindender Steigung, schneller zunimmt als in Längsrichtung,**
**dadurch gekennzeichnet, dass**
**eine Wanne zur Ölführung und Verminderung von Plantschverlusten einen Umfangsabschnitt eines Verzahnungsteils, insbesondere Zahnrades (100), umgibt, insbesondere in radialer und in axialer Richtung,**
**wobei die Wanne zumindest aus drei Teilen, also zumindest aus einer Bodenplatte (103) und zwei Seitenwänden, zusammengesetzt ist, wobei die Bodenplatte (103) mit den beiden Seitenwänden schraubverbunden ist,**
**wobei die Wanne am Gehäuse befestigt ist,**
**wobei die Wanne eine Ausnehmung, insbesondere einen Kanal, aufweist, insbesondere an ihrem tiefsten Oberflächenbereich, insbesondere also an dem den größten Radialabstand aufweisenden Oberflächenbereich,**
**insbesondere wobei bei Drehbewegung des Zahnrades (100) Öl aus dem Ölsumpf des Getriebes durch die Ausnehmung hindurch zwischen Wanne und Zahnrad (100) gefördert wird, insbesondere auf eine höhere Position, insbesondere in die Rinne, als der Pegel des Ölsumpfes,**
**wobei Bodenplatte (103) und die Seitenwände Stanz-Biegeteile sind.**

3. **Getriebe nach mindestens einem der vorangegangenen Ansprüche,**
**dadurch gekennzeichnet, dass**
**die Querrichtung parallel zur Wellenachse der abtreibenden Welle (101) ausgerichtet ist,**
**wobei die Längsrichtung senkrecht und/oder transversal zur Querrichtung ausgerichtet ist, insbesondere wobei die Längsrichtung parallel zu der von einer Wellenachse einer Zwischenwelle und von einer Wellenachse einer abtreibenden Welle (101) aufgespannten Ebene ausgerichtet ist,**

4. **Getriebe nach mindestens einem der vorangegangenen Ansprüche,**
**dadurch gekennzeichnet, dass**
**die Deckenwandung (171) einem Gewölbe entsprechend ausgeformt ist.**

5. **Getriebe nach mindestens einem der vorangegangenen Ansprüche,**
**dadurch gekennzeichnet, dass**
**aus der Rinne Schmieröl zu schmierenden Teilen, wie Lager und/oder Verzahnungsteil, zugeführt wird.**

6. Getriebe nach mindestens einem der vorangegangenen Ansprüche,
**dadurch gekennzeichnet, dass**
der Abstand, insbesondere der in radialer Richtung bestehende Abstand, zwischen der Bodenplatte (103) und den Köpfen der Verzahnung im von der Wanne überdeckten Umfangswinkelbereich konstant ist,
und/oder dass
die Bodenplatte (103) in radialer Richtung sich erstreckende Laschenabschnitte (120) aufweist, an welchen die Seitenwände mittels Schraubverbindung schraubverbunden sind,
und/oder dass
eine Seitenwand eine Kennzeichnung aufweist, an der ein Bohrloch zum Durchführen einer Schraube der Schraubverbindung anbringbar ist
und/oder dass
die Ausnehmung, insbesondere der Kanal, begrenzt ist durch die Bodenplatte (103) und die beiden Seitenwände.

7. Getriebe nach mindestens einem der vorangegangenen Ansprüche,
**dadurch gekennzeichnet, dass**
die Bodenplatte (103) und jede Seitenwand (102) jeweils einstückig, also einteilig, ausgebildet ist.

8. Getriebe nach mindestens einem der vorangegangenen Ansprüche,
**dadurch gekennzeichnet, dass**
das Gehäuseoberteil (1) einen rahmenartigen Tragabschnitt aufweist, an dem Wandabschnitte angeformt sind,
wobei der rahmenartige Tragabschnitt mit den Wandabschnitten einstückig, also einteilig, ausgeformt ist, insbesondere als Gussteil, insbesondere als Stahlgussteil.

9. Getriebe nach Anspruch 8,
**dadurch gekennzeichnet, dass**
die größte Wandstärke der Wandabschnitte kleiner ist als die größte Wandstärke des Tragabschnitts.

10. Getriebe nach Anspruch 8 oder 9,
**dadurch gekennzeichnet, dass**
der rahmenartige Tragabschnitt des Gehäuseoberteils (1) eine erste und eine zweite Querrippe (62) auf, insbesondere wobei die Querrippen sich hauptsächlich in horizontaler Richtung erstrecken, , insbesondere also in horizontaler Richtung weiter ausgedehnt sind als in jeder hierzu transversalen Richtung,
wobei der rahmenartige Tragabschnitt zwei erste Rippen (61) aufweist,
wobei die zwei ersten Rippen (61) voneinander beabstandet und sind und jeweils mit der ersten Querrippe (62) verbunden sind, insbesondere an zwei voneinander beabstandeten Stellen,
insbesondere wobei die ersten Rippen (61) sich hauptsächlich in vertikaler Richtung erstrecken, insbesondere also in vertikaler Richtung weiter ausgedehnt sind als in jeder hierzu transversalen Richtung,
wobei die zwei zweiten Rippen (61) voneinander beabstandet sind und jeweils mit der zweiten Querrippe (62) verbunden sind, insbesondere an zwei voneinander beabstandeten Stellen,
insbesondere wobei die zweiten Rippen (61) sich hauptsächlich in vertikaler Richtung erstrecken, insbesondere also in vertikaler Richtung weiter ausgedehnt sind als in jeder hierzu transversalen Richtung.

11. Getriebe nach Anspruch 10,
**dadurch gekennzeichnet, dass**
wobei jede erste Rippe (61) und jede zweite Rippe (61) an ihrem von der jeweiligen Querrippe (62) abgewandten Endbereich eine Tragöse (63) aufweist.

12. Getriebe nach mindestens einem der vorangegangenen Ansprüche,
**dadurch gekennzeichnet, dass**
eine erste Rippe (61) an ihrem Endbereich mit einem Balken (60), insbesondere Tragbalken, verbunden ist, der an seinem anderen Ende mit dem Endbereich einer zweiten Rippe (61) verbunden ist,
wobei die andere Rippe (61) an ihrem Endbereich mit einem Balken (60), insbesondere Tragbalken, verbunden ist, der wiederum an seinem anderen Ende mit dem Endbereich der anderen zweiten Rippe (61) verbunden ist,
insbesondere wobei die beiden Balken (60) parallel und voneinander beabstandet angeordnet sind.

13. Getriebe nach Anspruch 8, 9 oder 10,
**dadurch gekennzeichnet, dass**
ein Gehäusedeckel (4) eine Öffnung des Gehäuseoberteils (1) verschließt, welche von dem rahmenförmigen Tragabschnitt umfasst ist, insbesondere mit Abstand, insbesondere so dass der rahmenförmige Tragabschnitt die Öffnung nicht direkt berührt sondern von der Öffnung beabstandet ist.

14. Getriebe nach Anspruch 10,
**dadurch gekennzeichnet, dass**
eine Welle (101) des Getriebes mittels eines Lagers im Gehäuse gelagert ist,
wobei ein erster Teil der Lageraufnahme im Gehäuseoberteil (1) und ein zweiter Teil der Lageraufnahme im Gehäuseunterteil (2) angeordnet ist,
wobei der erste Teil der Lageraufnahme als aufgedickter Abschnitt ausgeführt ist und mit demjenigen Bereich der Querrippen (62) verbunden ist, an dem auch die jeweilige Rippe verbunden ist.

## Claims

1. Gearing comprising a housing,
the housing has a housing upper part (1) and a housing lower part (2),
the housing upper part (1) in particular being integrally moulded in a shell shape, in particular in a half-nutshell shape,
the housing upper part (1) having a top wall (171) that defines the interior of the gearing at least in part and is curved, in particular is concave, in the longitudinal direction and in the transverse direction such that oil droplets sprayed up towards the top wall (171) drip down along the top wall (171), either in or counter to the transverse direction, into a channel integrally moulded on the inside of the housing upper part (1),
the magnitude of the pitch of the top wall (171), in particular therefore the slope of the top wall (171) with respect to the horizontal direction, increasing in particular more quickly in the transverse direction than in the longitudinal direction as the distance increases from the highest point of the top wall (171), in particular from the point of the top wall (171) having a negligible pitch,
**characterised in that**
a trough for guiding oil and reducing splash losses surrounds a circumferential portion of a toothed part, in particular a gearwheel (100), in particular in the radial and axial directions,
the trough being composed of at least three parts, thus at least of a base plate (103) and two side walls, the base plate (103) being screwed to the two side walls,
the trough being fastened to the housing,
the trough having a recess, in particular a conduit, in particular at its lowest surface region, in particular therefore at the surface region having the greatest radial distance,
oil in particular being conveyed between the trough and gearwheel (100) from the oil sump of the gearing, through the recess, when the gearwheel (100) is rotating, in particular conveyed to a higher position than the level of the oil sump, in particular into the channel,
the base plate (103) and the side walls being punched bent parts.

2. Gearing comprising a housing,
the housing has a housing upper part (1) and a housing lower part (2),
the housing upper part (1) in particular being integrally moulded in a shell shape, in particular in a half-nutshell shape,
the housing upper part (1) having a top wall (171) that defines the interior of the gearing at least in part and is curved, in particular is concave, in the longitudinal direction and in the transverse direction,
the housing upper part (1) having, on its inside, a channel integrally moulded on the housing upper part (1), in particular a channel integrally moulded in one piece, i.e. as a single part,
the magnitude of the pitch of the top wall (171), in particular therefore the slope of the top wall (171) with respect to the horizontal direction, increasing more quickly in the transverse direction than in the longitudinal direction as the distance increases from the highest surface point of the top wall (171), in particular therefore from the surface point of the top wall (171) having a negligible pitch,
**characterised in that**
a trough for guiding oil and reducing splash losses surrounds a circumferential portion of a toothed part, in particular a gearwheel (100), in particular in the radial and axial directions,
the trough being composed of at least three parts, thus at least of a base plate (103) and two side walls, the base plate (103) being screwed to the two side walls,
the trough being fastened to the housing,
the trough having a recess, in particular a conduit, in particular at its lowest surface region, in particular therefore at the surface region having the greatest radial distance,
oil in particular being conveyed between the trough and gearwheel (100) from the oil sump of the gearing, through the recess, when the gearwheel (100) is rotating, in particular conveyed to a higher position than the level of the oil sump, in particular into the channel,
the base plate (103) and the side walls being punched bent parts.

3. Gearing according to at least one of the preceding claims,
**characterised in that**
the transverse direction is oriented in parallel with the shaft axis of the output shaft (101), the longitudinal direction being oriented perpendicularly and/or transversely to the transverse direction, the longitudinal direction in particular being oriented in parallel with the plane spanned by a shaft axis of an intermediate shaft and a shaft axis of an output shaft (101).

4. Gearing according to at least one of the preceding claims,
**characterised in that**
the top wall (171) is integrally moulded in the manner of an arch.

5. Gearing according to at least one of the preceding claims,
**characterised in that**
lubrication oil is supplied from the channel to parts requiring lubrication, such as bearings and/or a toothed part.

6. Gearing according to at least one of the preceding claims,
**characterised in that**
the distance, in particular the distance in the radial direction, between the base plate (103) and the tips of the gear teeth is constant in the circumferential angular range covered by the trough
and/or **in that**
the base plate (103) has tab portions (120) that extend in the radial direction and to which the side walls are screwed by means of a screw connection
and/or **in that**
one side wall has a mark at which a drilled hole can be made for guiding through a screw of the screw connection
and/or **in that**
the recess, in particular the conduit, is defined by the base plate (103) and the two side walls.

7. Gearing according to at least one of the preceding claims,
**characterised in that**
the base plate (103) and each side wall (102) are each formed as one piece, i.e. as single parts.

8. Gearing according to at least one of the preceding claims,
**characterised in that**
the housing upper part (1) has a frame-like supporting portion on which wall portions are integrally formed,
the frame-like supporting portion being integrally formed in one piece, i.e. as a single part, with the wall portions, in particular as a cast part, in particular as a steel cast part.

9. Gearing according to claim 8,
**characterised in that**
the greatest wall thickness of the wall portions is smaller than the greatest wall thickness of the supporting portion.

10. Gearing according to either claim 8 or claim 9,
**characterised in that**
the frame-like supporting portion of the housing upper part (1) has a first and a second cross rib (62), the cross ribs in particular extending mainly in the horizontal direction, in particular therefore having a greater extent in the horizontal direction than in any direction transverse thereto,
the frame-like supporting portion having two first ribs (61),
the two first ribs (61) being spaced apart from one another and each connected to the first cross rib (62), in particular at two spaced-apart points,
the first ribs (61) in particular extending mainly in the vertical direction, in particular therefore having a greater extent in the vertical direction than in any direction transverse thereto,
the two second ribs (61) being spaced apart from one another and each connected to the second cross rib (62), in particular at two spaced-apart points,
the second ribs (61) in particular extending mainly in the vertical direction, in particular therefore having a greater extent in the vertical direction than in any direction transverse thereto.

11. Gearing according to claim 10,
**characterised in that**
each first rib (61) and each second rib (61) have a lifting eye (63) at their end region remote from the particular cross rib (62).

12. Gearing according to at least one of the preceding claims,
**characterised in that**
a first rib (61) is connected, at its end region, to a beam (60), in particular a supporting beam, which is connected at its other end to the end region of a second rib (61),
the other rib (61) being connected, at its end region, to a beam (60), in particular a supporting beam, which is in turn connected at its other end to the end region of the other second rib (61),
the two beams (60) in particular being arranged in parallel and spaced apart from each other.

13. Gearing according to claim 8, 9 or 10,
**characterised in that**
a housing lid (4) seals an opening in the housing upper part (1), said opening being enclosed by the frame-like supporting portion, in particular at a distance, in particular such that the frame-like supporting portion does not directly touch the opening, but rather is spaced apart from the opening.

14. Gearing according to claim 10,
**characterised in that**
a shaft (101) of the gearing is mounted in the housing by means of a bearing,
a first part of the bearing seat being arranged in the housing upper part (1) and a second part of the bearing seat being arranged in the housing lower part (2),
the first part of the bearing seat being configured as a thickened portion and being connected to the region of the cross ribs (62) at which the particular rib is also connected.

## Revendications

1. Mécanisme de transmission équipé d'un boîtier,
le boîtier présentant une partie supérieure de boîtier (1) et une partie inférieure de boîtier (2),
sachant en particulier que la partie supérieure de boîtier (1) est façonnée en forme de coque, en particulier en forme de coque en demi-noix,
sachant que la partie supérieure de boîtier (1) présente une paroi de couverture (171) délimitant au moins partiellement l'espace intérieur du mécanisme de transmission et incurvée de telle sorte en direction longitudinale et en direction transversale, en particulier concave, que les gouttelettes d'huile projetées vers le haut en direction de la paroi de couverture (171) s'égouttent en direction transversale, ou à l'opposé de la direction transversale, le long de la paroi de couverture (171), dans une rigole façonnée sur le côté intérieur de la partie supérieure de boîtier (1),
sachant en particulier que le montant de la pente, donc en particulier l'inclinaison de la paroi de couverture (171) par rapport à la direction horizontale, augmente plus rapidement en direction transversale qu'en direction longitudinale à mesure qu'augmente la distance du point le plus haut de la paroi de couverture (171), en particulier du point de la paroi de couverture (171) où la pente est quasiment nulle,
**caractérisé en ce qu'**une cuve destinée à guider l'huile et à réduire les pertes par éclaboussures entoure une partie périphérique d'un élément de denture, en particulier d'une roue dentée (100), en particulier en direction radiale et en direction axiale,
sachant que la cuve est composée au moins de trois parties, donc au moins d'une plaque de fond (103) et de deux parois latérales, sachant que la plaque de fond (103) est assemblée par vis aux deux parois latérales,
sachant que la cuve est fixée sur le boîtier,
sachant que la cuve présente un évidement, en particulier un canal, en particulier sur sa région de surface la plus basse, en particulier donc sur la région de surface présentant la plus grande distance radiale,
sachant en particulier que, lors du mouvement de rotation de la roue dentée (100), de l'huile provenant du carter d'huile du mécanisme de transmission est transportée à travers l'évidement entre la cuve et la roue dentée (100), en particulier à une position plus haute, en particulier dans la rigole, que le niveau du carter d'huile,
sachant que la plaque de fond (103) et les parois latérales sont des pièces découpées et pliées.

2. Mécanisme de transmission équipé d'un boîtier,
le boîtier présentant une partie supérieure de boîtier (1) et une partie inférieure de boîtier (2),
sachant en particulier que la partie supérieure de boîtier (1) est façonnée en forme de coque, en particulier en forme de coque en demi-noix,
sachant que la partie supérieure de boîtier (1) présente une paroi de couverture (171) délimitant au moins partiellement l'espace intérieur du mécanisme de transmission et incurvée en direction longitudinale et en direction transversale, en particulier concave,
la partie supérieure de boîtier (1) présentant sur son côté intérieur une rigole façonnée sur la partie supérieure de boîtier (1), en particulier façonnée d'un seul tenant, donc intégralement,
sachant que le montant de la pente de la paroi de couverture (171), donc en particulier l'inclinaison de la paroi de couverture (171) par rapport à la direction horizontale, augmente plus rapidement en direction transversale qu'en direction longitudinale à mesure qu'augmente la distance du point le plus haut de la surface de la paroi de couverture (171), en particulier donc du point de la surface de la paroi de couverture (171) où la pente est quasiment nulle,
**caractérisé en ce qu'**une cuve destinée à guider l'huile et à réduire les pertes par éclaboussures entoure une partie périphérique d'un élément de denture, en particulier d'une roue dentée (100), en particulier en direction radiale et en direction axiale,
sachant que la cuve est composée au moins de trois parties, donc au moins d'une plaque de fond (103) et de deux parois latérales, sachant que la plaque de fond (103) est assemblée par vis aux deux parois latérales,
sachant que la cuve est fixée sur le boîtier,
sachant que la cuve présente un évidement, en particulier un canal, en particulier sur sa région de surface la plus basse, en particulier donc sur la région de surface présentant la plus grande distance radiale,
sachant en particulier que, lors du mouvement de rotation de la roue dentée (100), de l'huile provenant du carter d'huile du mécanisme de transmission est transportée à travers l'évidement entre la cuve et la roue dentée (100), en particulier à une position plus haute, en particulier dans la rigole, que le niveau du carter d'huile,
sachant que la plaque de fond (103) et les parois latérales sont des pièces découpées et pliées.

3. Mécanisme de transmission selon au moins une des revendications précédentes, **caractérisé en ce que** la direction transversale est orientée parallèlement à l'axe de l'arbre de sortie (101),
sachant que la direction longitudinale est orientée perpendiculairement et/ou transversalement à la direction transversale, sachant en particulier que la direction longitudinale est orientée parallèlement au plan sous-tendu par l'axe d'un arbre intermédiaire et par l'axe d'un arbre de sortie (101).

4. Mécanisme de transmission selon au moins une des revendications précédentes, **caractérisé en ce que** la paroi de couverture (171) est façonnée d'une manière correspondant à une voûte.

5. Mécanisme de transmission selon au moins une des revendications précédentes, **caractérisé en ce que** de l'huile de lubrification est apportée à partir de la rigole à des éléments à lubrifier, comme des paliers et/ou un élément de denture.

6. Mécanisme de transmission selon au moins une des revendications précédentes, **caractérisé en ce que** la distance, en particulier la distance existante en direction radiale, entre la plaque de fond (103) et les têtes de la denture est constante dans la plage d'angle inscrit couverte par la cuve,
et/ou **en ce que** la plaque de fond (103) présente des parties de pattes (120) s'étendant en direction radiale, auxquelles les parois latérales sont assemblées par vis au moyen d'un assemblage vissé,
et/ou **en ce qu'**une paroi latérale présente un marquage où peut être pratiqué un trou foré afin de faire passer une vis de l'assemblage vissé,
et/ou **en ce que** l'évidement, en particulier le canal, est délimité par la plaque de fond (103) et les deux parois latérales.

7. Mécanisme de transmission selon au moins une des revendications précédentes, **caractérisé en ce que** la plaque de fond (103) et chaque paroi latérale (102) est respectivement réalisée d'un seul tenant, donc intégralement.

8. Mécanisme de transmission selon au moins une des revendications précédentes, **caractérisé en ce que** la partie supérieure de boîtier (1) présente une partie porteuse du genre cadre sur laquelle sont formées des parties de paroi,
sachant que la partie porteuse du genre cadre est façonnée d'un seul tenant avec les parties de paroi, donc intégralement, en particulier sous forme de pièce moulée, en particulier sous forme de pièce moulée en acier.

9. Mécanisme de transmission selon la revendication 8, **caractérisé en ce que** la plus grande épaisseur de paroi des parties de paroi est inférieure à la plus grande épaisseur de paroi de la partie porteuse.

10. Mécanisme de transmission selon la revendication 8 ou 9, **caractérisé en ce que** la partie porteuse du genre cadre de la partie supérieure de boîtier (1) présente une première et une deuxième nervure transversale (62), sachant en particulier que les nervures transversales s'étendent principalement en direction horizontale, donc en particulier sont plus étendues en direction horizontale que dans toute direction transversale à la direction horizontale,
sachant que la partie porteuse du genre cadre présente deux premières nervures (61), sachant que les deux premières nervures (61) sont distantes l'une de l'autre et sont respectivement reliées à la première nervure transversale (62), en particulier en deux endroits distants l'un de l'autre,
sachant en particulier que les premières nervures (61) s'étendent principalement en direction verticale, en particulier donc sont plus étendues en direction verticale que dans toute direction transversale à la direction verticale,
sachant que les deux deuxièmes nervures (61) sont distantes l'une de l'autre et sont respectivement reliées à la deuxième nervure transversale (62), en particulier en deux endroits distants l'un de l'autre,
sachant en particulier que les deuxièmes nervures (61) s'étendent principalement en direction verticale, en particulier donc sont plus étendues en direction verticale que dans toute direction transversale à la direction verticale.

11. Mécanisme de transmission selon la revendication 10, **caractérisé en ce que** chaque première nervure (61) et chaque deuxième nervure (61) présente un œillet porteur (63) sur sa région terminale éloignée de la nervure transversale respective (62).

12. Mécanisme de transmission selon au moins une des revendications précédentes, **caractérisé en ce qu'**une première nervure (61) est reliée sur sa région terminale à une poutre (60), en particulier une poutre porteuse, qui est reliée à son autre extrémité à la région terminale d'une deuxième nervure (61),
sachant que l'autre nervure (61) est reliée sur sa région terminale à une poutre (60), en particulier une poutre porteuse, qui à nouveau est reliée à son autre extrémité à la région terminale de l'autre deuxième nervure (61),
sachant en particulier que les deux poutres (60) sont disposées parallèlement et à distance entre elles.

13. Mécanisme de transmission selon la revendication 8, 9 ou 10, **caractérisé en ce qu'**un couvercle de boîtier (4) ferme une ouverture de la partie supérieure de boîtier (1) qui est entourée par la partie porteuse en forme de cadre, en particulier à distance, en particulier de sorte que la partie porteuse en forme de cadre ne touche pas directement l'ouverture mais est espacée de l'ouverture.

14. Mécanisme de transmission selon la revendication 10, **caractérisé en ce qu'**un arbre (101) du mécanisme de transmission est monté au moyen d'un palier dans le boîtier,
sachant qu'une première partie du logement de palier est disposée dans la partie supérieure de boîtier (1) et une deuxième partie du logement de palier dans la partie inférieure de boîtier (2),
sachant que la première partie du logement de palier est réalisée sous la forme d'une partie épaissie et est reliée à la région des nervures transversales (62) à laquelle est également reliée la nervure respective.
